# EUROPEAN PATENT SPECIFICATION

(11) **EP 2 510 770 B1**
(45) Date of publication and mention of the grant of the patent: **04.11.2015**
(21) Application number: 12164320.9
(22) Date of filing: 16.04.2012
(51) Int. Cl.: A01C 11/00, A01C 11/04, A01G 23/04

(54) **Water plant transplanting method and system**
Verfahren und System zum Umplanzen von Wasserpflanzen
Un procédé et un système pour transplanter des plantes d'eau

(30) Priority: 15.04.2011 IT MI20110650
(43) Date of publication of application: 17.10.2012
(73) Proprietor: Saipem S.p.A., San Donato Milanese (IT)
(72) Inventor: Faidutti, Denis, 33050 Mortegliano (IT); Mottini, Mauro, 27020 Travaco' Siccomario (IT); Giovannini, Umberto, 20094 Corsico (IT); Alloggio, Giovanni, 12040 Sanfre' (IT); Artico, Gianfranco, 10048 Vinovo (IT); Rege Cambrin, Giorgio, 10040 Volvera (IT)
(74) Representative: Bergadano, Mirko

(56) References cited:
- DE-A1- 3 343 449
- US-A- 2 740 234
- US-A1- 2003 221 598
- US-A1- 2004 040 481

## Description

The present invention relates to a method of transplanting water plants, in particular Posidonia Oceanica, which is endemic to the Mediterranean Sea, and has the same characteristics as land plants, i.e. rhizomes, stems, leaves, flowers and fruit. Posidonias grow mainly in sandy salt-water beds, at heights of 3 to 47 metres, depending on the transparency of the water, and form vast underwater meadows which are vital to the entire marine ecosystem.

Posidonia Oceanica meadows sometimes recede in certain marine sites, resulting in a grave loss of biodiversity and deterioration in water quality. In fact, because of its sensitivity to changes in environmental conditions, Posidonia Oceanica is considered a good biological water quality indicator.

Water plants, particularly Posidonias, must therefore be planted to rebuild underwater ecosystems and, at times, to firm up the surface layer of sandy underwater beds subject to erosion. Posidonia rhizomes, in fact, form a dense network, which provides for effectively strengthening the surface layer of the bed.

Water plant planting methods and equipment are known from documents WO 2007/054991 A1, EP 736,494 A2, FR 2,239,120, FR 2,623,366 and FR 2,695,536. The methods described, however, call for using divers skilled in planting water plants, and the equipment for protecting the bedded cuttings is often abandoned on the bed.

The methods described are therefore expensive, and invariably introduce foreign material into the natural aquatic ecosystem supposedly being rebuilt. In particular, the amount of skilled labour involved makes planting vast meadows extremely expensive, which is one reason it is rarely done.

Partial, temporary destruction of water plant meadows is also caused by the construction of underwater installations involving work on the underwater bed, such as digging trenches to bury cables and/or pipelines along relatively shallow coastlines, to protect the cables or pipelines from blunt objects, such as trailing anchors, nets, etc.

Digging and burying work obviously damages any water plants along the trench line, so adult plants along and close to the trench are best transferred to safe, relatively contiguous areas where similar ecosystems can be reconstructed. In other words, a new ecosystem must be created to compensate for the one temporarily impoverished by construction of underwater installations.

Existing literature (Boudouresque, 1996) provides only generally accepted guidelines - a sort of Good Conduct Code - by which to select compensatory transplant sites in the event of construction work involving partial, temporary destruction of Posidonia meadows.

According to the main guidelines in the code :
a) The selected transplant site must be one in which Posidonias have already grown in the past.
b) The selected transplant site must be one in which Posidonias have already grown in the past, or which has been suitably modified to provide the right environmental conditions for their growth.
c) The factors responsible for killing the plant must no longer exist.
d) Transplanting must not be carried out close to extensive meadows.
e) Transplanting must not compensate for deliberate destruction of a meadow.
f) Any replanting project must be tested beforehand.
g) The taking of cuttings must not endanger natural vegetation.
h) Replanting must be conducted as part of an overall regional ecosystem management strategy.

Transferring plants that would be destroyed anyway by trenching work saves part of the doomed vegetation and, at the same time, avoids taking cuttings from, and so possibly depleting, other meadows.

The success of the operation depends strongly on choosing the right transplant density, which is what determines growth of the rhizome. Existing literature states that Posidonia rhizomes grow at a rate of a few centimetres a year in low-density conditions.

Transplant density choices must therefore be made bearing in mind all the factors involved. On the one hand, density must be such as to deposit sufficient sediment, in normal conditions, to anchor the rhizomes firmly to the bed, but without reaching the critical density level. And, on the other, it must be low enough to promote colonization of the substrate surrounding the transplant, to maintain a high growth rate of the rhizome. This aspect normally takes precedence over simply preserving numbers of plants more or less equal to natural-meadow density.

The transplant method most widely used at present is the one described in Patent Application WO 2007/054991.

This method is performed manually by qualified divers, who are given a training course on Posidonia Oceanica, dig-up technology and procedures, and subsequent handling, and are supervised by skilled technicians.

The method described in Patent Application WO 2007/054991 employs concrete frames roughly 50x50 cm square on the outside, 40x40 cm square on the inside, with a working area of 1600 sq.cm. The frames are 6-8 cm thick, are fitted with zinc-plated iron netting with a polygonal mesh suitable for retaining cuttings, i.e. of roughly 1-1.5 cm, and are eased onto the bed and variously arranged to cover the target area for reconstruction as best as possible. All the equipment described in installed manually by divers.

The transplant density per unit area must be selected before the cuttings are bedded. The cutting density per frame is vital to the success of the operation, as it is this which determines how fast the rhizomes grow out of the frame and root in the free sediment. Density is always calculated on the basis of the mean density observed on site, and must not be so low as to prevent sediment retention between the cuttings. Given, however, the wide range of densities observable in potentially suitable planting sites, it is best to opt for a low cutting density (20-30 per sq.m) to avoid fierce competition for light and nutrients, and to promote fast rhizome growth.

The cuttings are bedded by hand, by simply inserting the rhizomes inside the polygonal mesh, so the rhizomes and roots contact the sediment.

US 2003/221598 teaches digging a slab of sea grass, transporting the slab of sea grass to a new location, digging a furrow with the same apparatus that is used to dig the slab of sea grass and depositing the slab of sea grass in the furrow.

It is an object of the present invention to provide a method designed to eliminate the drawbacks of the known art, and which in particular is simpler and cheaper than known methods.

According to the present invention, there is provided a method of transplanting water plants, the method comprising the steps of removing a clump of water plants from a dig-up site along the bed of a body of water; digging a seat for the clump in the bed of the body of water at a planting site; transporting the clump of water plants from the dig-up site to the planting site; and bedding the clump of water plants in the seat, wherein the clump is removed, transported, and bedded in the seat using a dig-up grab; positioning the dig-up grab inside a protection grab; and sequentially opening the protection grab and dig-up grab to bed the clump in the seat.

The method according to the invention can be mechanized, involves no equipment that is abandoned on the bed of the body of water, and provides for planting a new site with clumps of water plants of appropriate natural density.

In a preferred embodiment of the invention, the clump and seat are complementary, so bedding the clumps does not alter the topography of the planting site, and the integrity of the clump, and therefore the success of the transplant operation, are guaranteed.

In a preferred embodiment of the invention, the clump and seat are bowl-shaped, so orange-peel grab buckets can be used for easy mechanization of the method.

In a preferred embodiment of the invention, the method comprises the step of protecting the seat using a protection grab of substantially the same shape, size and design as the dig-up grab, so that, once formed, the seat is protected against foreign bodies, keeps its original shape, and permits a snug fit with the clump.

In a preferred embodiment of the invention, the step of digging the seat in the bed of the body of water comprises closing the protection grab together with an excavation grab on the bed of the body of water, so the excavation grab is positioned contacting the protection grab and removes a mass of the bed, while the protection grab remains contacting the seat, i.e. the protection grab and excavation grab are closed in rapid succession to avoid exposing the seat to foreign bodies.

In a preferred embodiment of the invention, the method comprises transporting the clump from the dig-up site to the planting site, soaked in a basin of a clump parking module on board a floating unit, to prevent the plants from wilting during transport.

In a preferred embodiment of the invention, the method comprises selectively connecting a dig-up grab to a first actuating module to perform the dig-up process, and to a second actuating module to perform the planting process.

The present invention also relates to a system for transplanting water plants, designed to eliminate the drawbacks of the known art.
According to the present invention, there is provided a system for transplanting water plants, the system comprising a dig-up grab for removing a clump of water plants from a dig-up site along the bed of a body of water; an excavation grab for digging a seat for the clump in the bed of the body of water at a planting site; and a bedding assembly for guiding the dig-up grab and the clump into the seat, and releasing the clump inside the seat,wherein the bedding assembly comprises a guide device (29), in turn comprising a protection grab (52) for forming and protecting the seat, and a structure (50) for guiding the dig-up grab (14) into the seat.

The system according to the invention provides for a high transplant rate using mechanized equipment designed to optimize dig-up, transport and planting.

A number of non-limiting embodiments of the invention will be described by way of example with reference to the accompanying drawings, in which :
Figure 1 shows a schematic plan view, with parts removed for clarity, of a water plant transplant system in accordance with the present invention;
Figure 2 shows a larger-scale plan view, with parts removed for clarity, of a detail of the Figure 1 transplant system;
Figure 3 shows a larger-scale view, with parts removed for clarity, of a further detail of the Figure 1 system;
Figures 4 to 14 show side views, with parts removed for clarity, of successive stages in the transplant method according to the present invention;
Figure 15 shows a larger-scale, partly sectioned view of a clump of water plants bedded at a planting site;
Figure 16 shows a view in perspective, with parts removed for clarity, of a dig-up grab;
Figure 17 shows a view in perspective, with parts removed for clarity, of a dig-up grab actuating module;
Figure 18 shows a side view, with parts removed for clarity, of an actuating module connected to the dig-up grab;
Figure 19 shows a view in perspective, with parts removed for clarity, of an excavation grab;
Figure 20 shows a view in perspective, with parts removed for clarity, of an excavation grab actuating module;
Figure 21 shows a side view, with parts removed for clarity, of a guide device;
Figure 22 shows a view in perspective, with parts removed for clarity, of a bedding assembly comprising the Figure 21 guide device and the Figure 20 actuating module;
Figure 23 shows a side view, with parts removed for clarity, of the Figure 22 bedding assembly;
Figure 24 shows a view in perspective, with parts removed for clarity, of a clump parking module;
Figure 25 shows a view in perspective, with parts removed for clarity, of a grab parking module;
Figure 26 shows a view in perspective, with parts removed for clarity, of a parking module for the Figure 17 actuating module;
Figure 27 shows a view in perspective, with parts removed for clarity, of a parking module for the Figure 20 actuating module and the Figure 21 guide device.

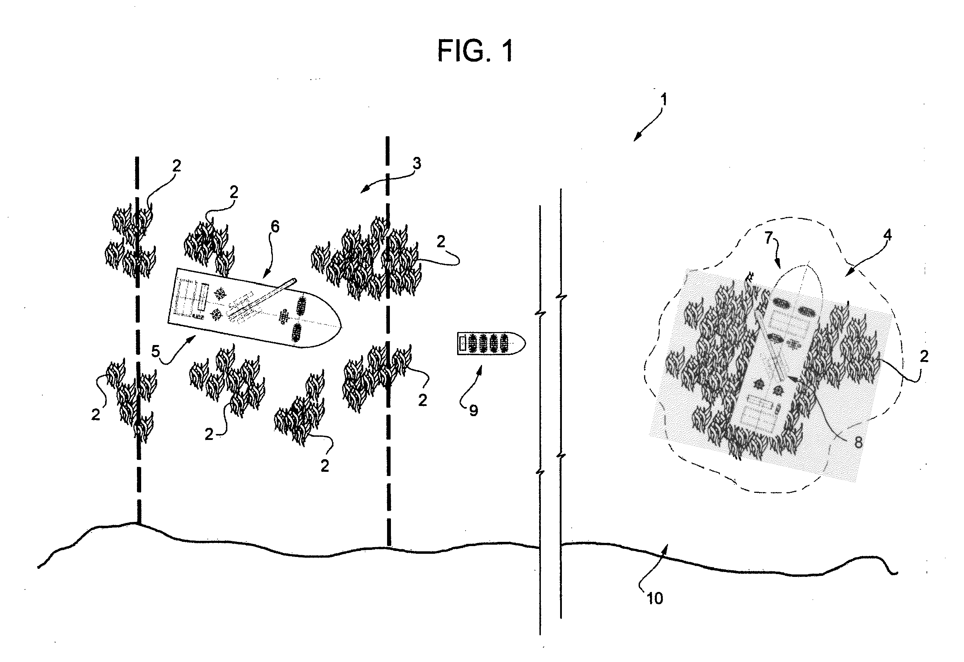

Number 1 in Figure 1 indicates as a whole a system for transplanting water plants 2 from a dig-up site 3 to a planting site 4.

System 1 comprises a floating unit 5, preferably a motor barge; a crane 6 on floating unit 5; a floating unit 7, preferably a motor barge; a crane 8 on floating unit 7; and a floating unit 9, preferably a shuttle, which moves back and forth between floating units 5 and 7 to transfer water plants from dig-up site 3 to planting site 4.

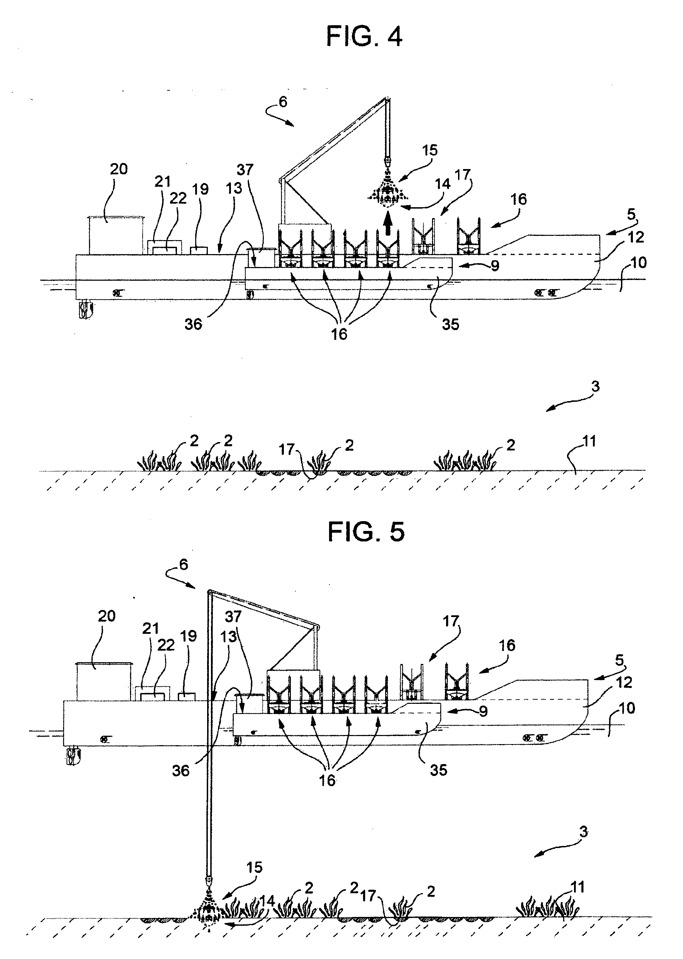

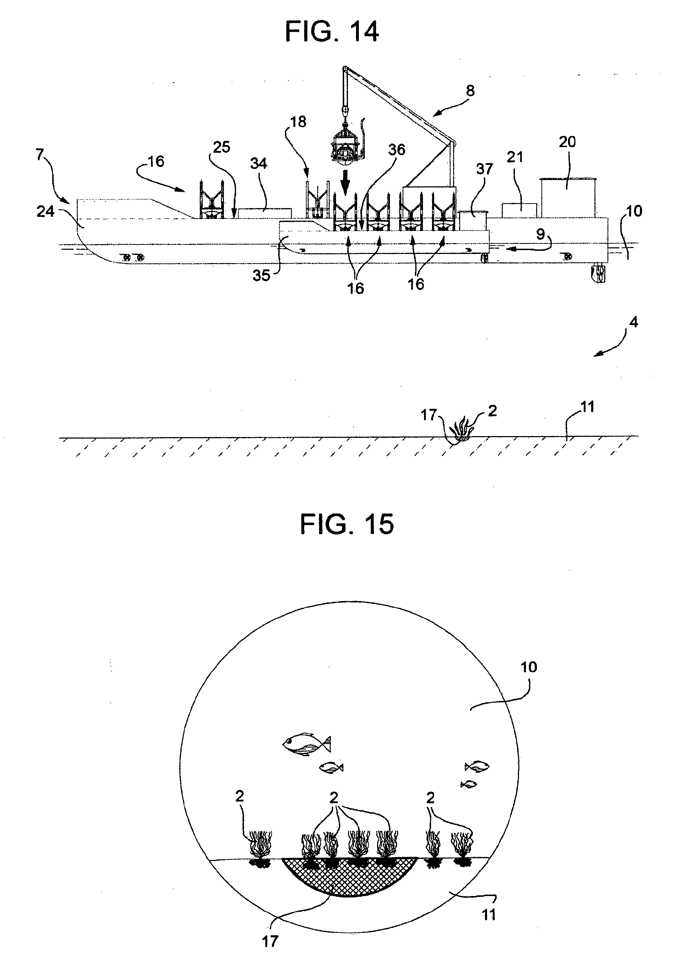

Floating units 5, 7 and 9 are located on a body of water 10. More specifically, floating units 5 and 7 operate at dig-up site 3 and planting site 4 respectively, and are both designed to move through body of water 10 over dig-up site 3 and planting site 4 respectively, and to stop in given positions over dig-up site 3 and planting site 4. For the purpose of the present invention, dig-up site 3 and planting site 4 extend along the bed 11 (Figures 4 and 14) of body of water 10.

System 1 comprises special equipment with which to equip floating units 5, 7, 9 to handle and transplant water plants.

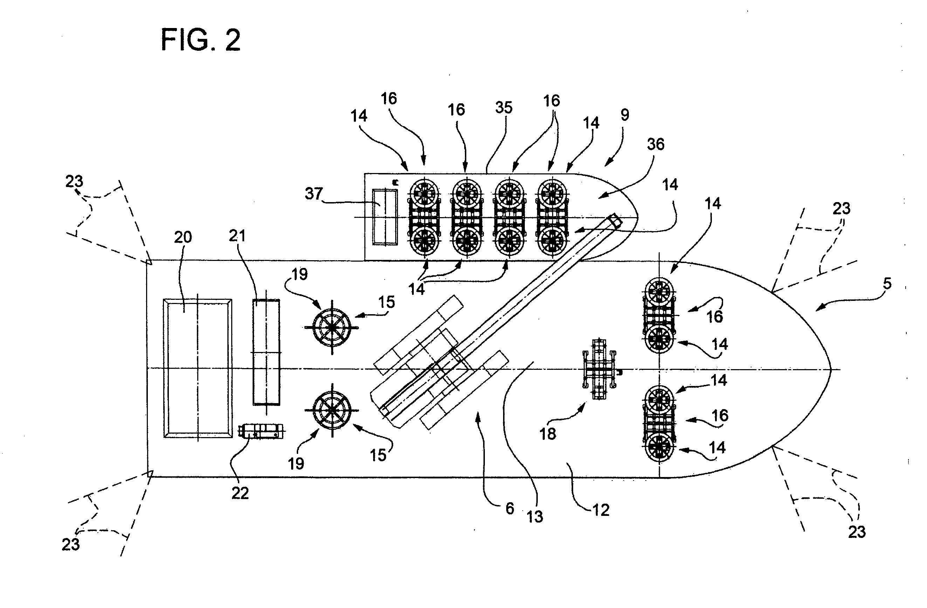

With reference to Figure 2, floating unit 5 comprises a floating structure 12 with a weather deck 13 equipped with crane 6, and is equipped with a number of dig-up grabs 14; two actuating modules 15 for operating dig-up grabs 14; a plurality of clump parking modules 16, each designed, in the example shown, to house two dig-up grabs 14 together with respective clumps 17 (Figure 14); a grab parking module 18; two parking modules 19 for actuating modules 15; a cabin 20; a control unit 21; and a power unit 22. Number 23 in Figure 2 indicates mooring lines for mooring floating unit 5 in a given position in body of water 10, over a precise area of dig-up site 3.

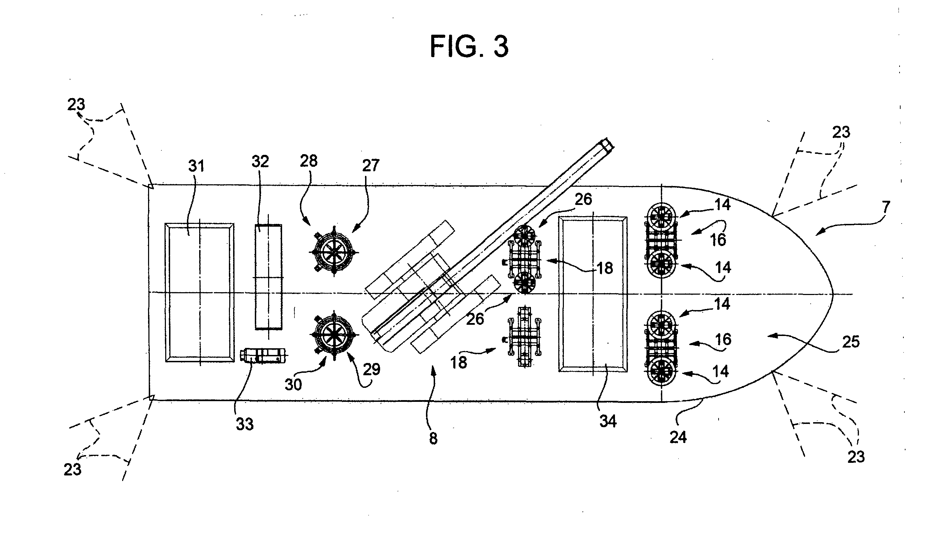

With reference to Figure 3, floating unit 7 comprises a floating structure 24; a weather deck 25; a plurality of excavation grabs 26; an actuating module 27 for operating dig-up grabs 14 and excavation grabs 26; a plurality of clump parking modules 16, each designed, in the example shown, to house two dig-up grabs 14 with respective clumps 17; a parking module 28 for actuating module 27; a guide device 29; a plurality of grab parking modules 18; a guide device parking module 30; a cabin 31; a control unit 32; a power unit 33; and a container 34. Floating unit 7 is moored in position by mooring lines 23.

In Figure 4, floating unit 9 is positioned alongside floating unit 7, and comprises a floating structure 35, a weather deck 36, a cabin 37, and a plurality of clump parking modules 16.

Generally speaking, the method according to the invention comprises removing clumps 17 of water plants 2 from bed 11 of body of water 10 at dig-up site 3 (Figure 4), and bedding clumps 17 of water plants 2 at planting site 4 (Figure 14). The Applicant has observed that the success with which water plants are transplanted depends largely on the way clumps 17 are bedded, and on preserving the integrity of clumps 17. System 1 substantially provides for mechanizing the method to implement it relatively cheaply.

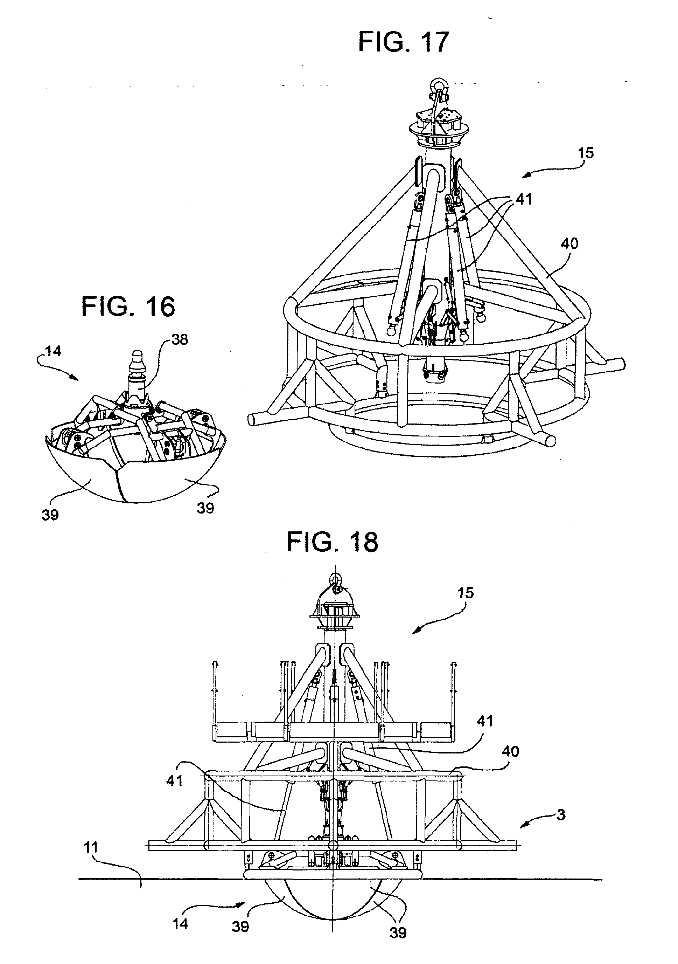

With reference to Figure 16, each dig-up grab 14 comprises a frame 38, and four bowl-shaped scoops 39, each hinged to frame 38, and also serves to hold clump 17 of plants 2 as it is transferred from dig-up site 3 to planting site 4. In other words, as opposed to being transferred between different containers, clump 17 remains inside dig-up grab 14 from when it is removed at dig-up site 3 (Figure 4) until it is bedded at planting site 4 (Figure 15). Dig-up grab 14 is connectable releasably to actuating module 15 in Figures 17 and 18. With reference to Figure 17, actuating module 15 comprises a frame 40 connectable selectively to frame 38; a plurality of actuators 41, each connectable selectively to a respective scoop 39 (Figure 18); hydraulic pipes connected to the actuators; and electric control cables. Generally speaking, actuating module 15 is handled by crane 6 (Figure 4) and provides for operating and transferring dig-up grabs 14 (Figures 16 and 18).

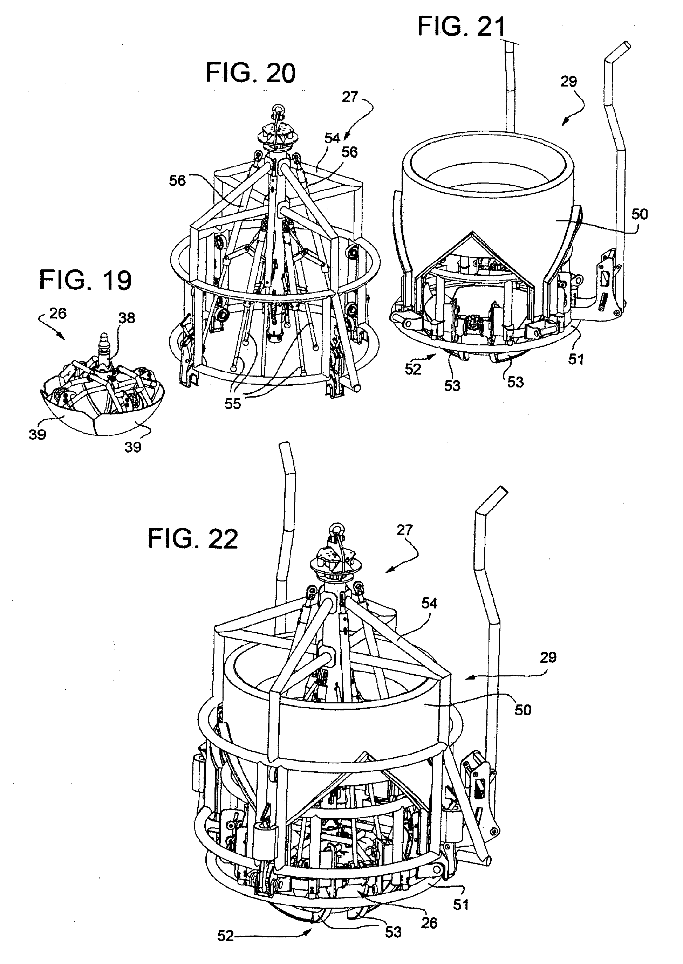

With reference to Figure 19, excavation grab 26 is identical to dig-up grab 14, and comprises the same component parts.

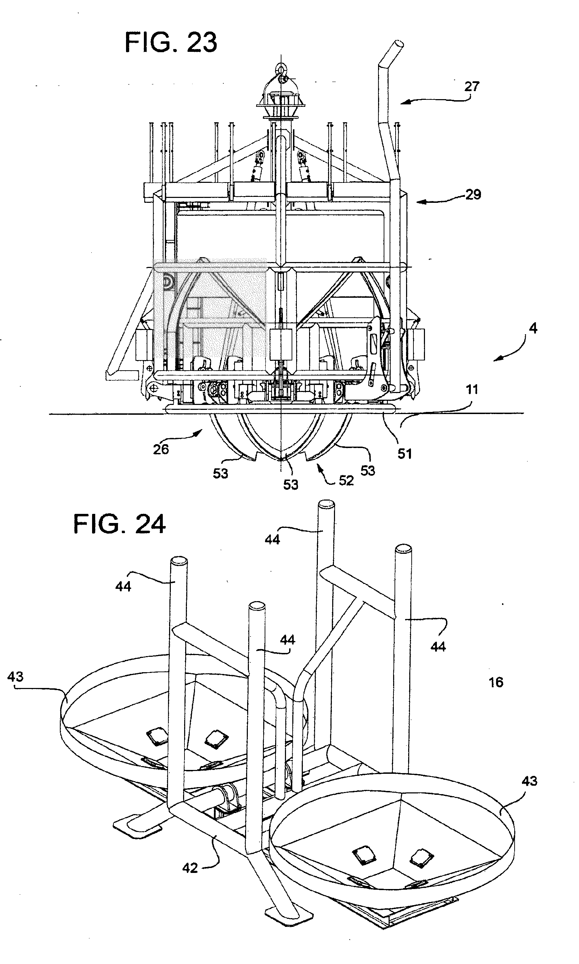

With reference to Figure 24, clump parking modules 16 serve to support dig-up grabs 14, with or without clumps 17, and to keep clumps 17 soaked in water - in this case, seawater. For which purpose, each clump parking module 16 comprises a frame 42; and two basins 43, each for housing a respective dig-up grab 14 and respective clump 17, if any. In the example shown, frame 42 comprises uprights 44 for guiding dig-up grabs 14. And clump parking modules 16 are mounted on floating units 5, 7 and 9.

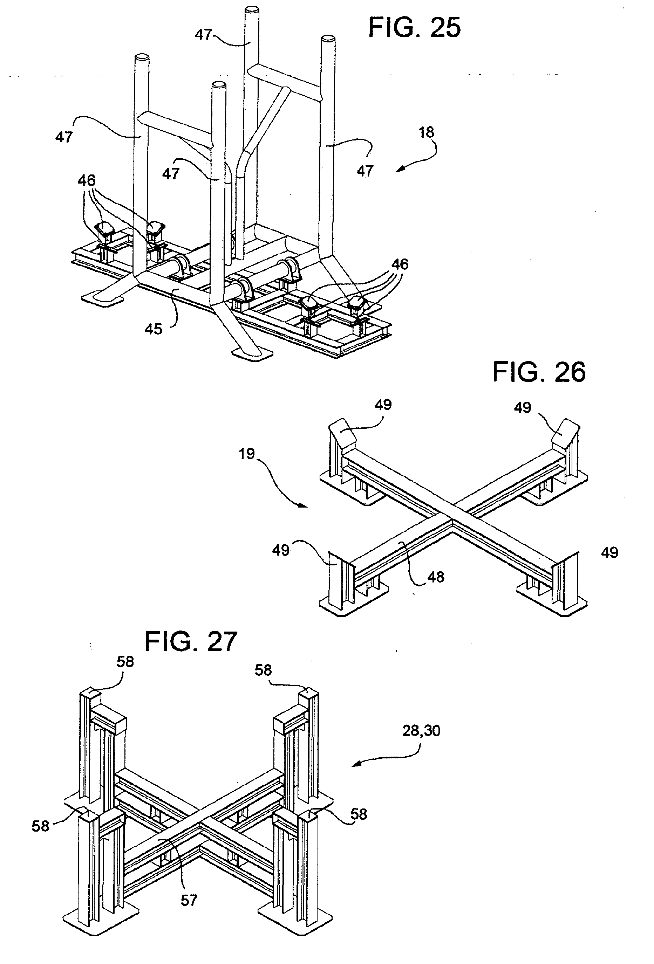

With reference to Figure 25, each grab parking module 18 serves to house empty dig-up grabs 14 and excavation grabs 26, and comprises a frame 45; and two supports 46 for dig-up grabs 14 and/or excavation grabs 26. Frame 45 comprises uprights 47. And grab parking modules 18 are mounted on floating units 5 and 7.

With reference to Figure 26, module 19 for parking the actuating module has a cross frame 48 with lateral stops 49.

With reference to Figure 21, guide device 29 serves to cut bed 11 of body of water 10, protect the clump 17 bedding area, and guide excavation grab 26 and dig-up grab 14 at the planting site.

Guide device 29 comprises a supporting structure 50 in the form of a cylindrical wall; a supporting bar 51 located at the bottom end of supporting structure 50, and which rests on bed 11; and a protection grab 52 for cutting bed 11 of body of water 10, and which is substantially similar to dig-up grab 14 and excavation grab 26, and comprises four bowl-shaped scoops 53 hinged to supporting structure 50.

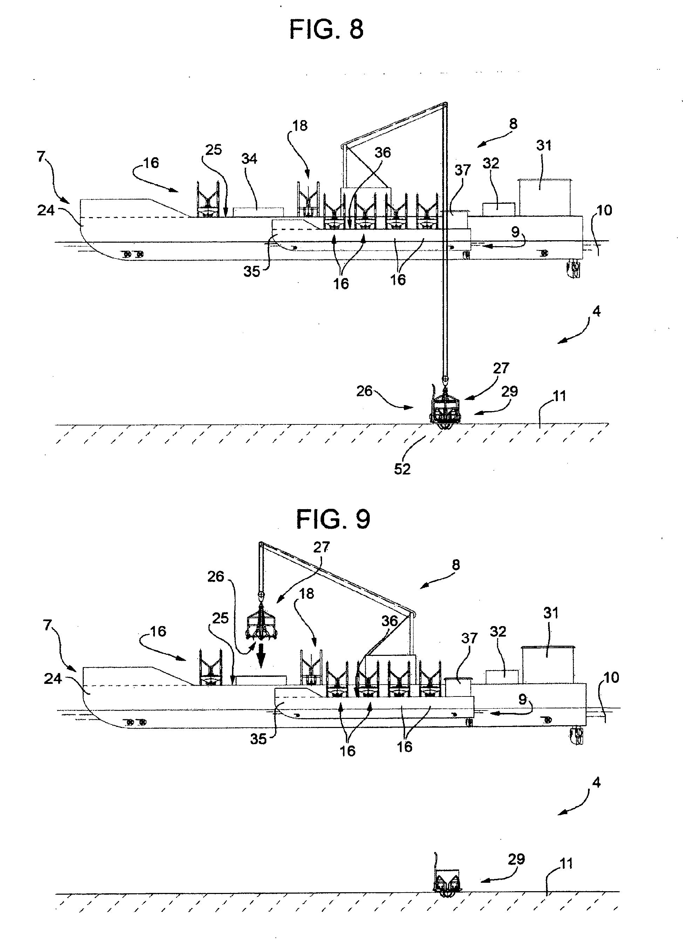

With reference to Figure 20, actuating module 27 comprises a frame 54 connectable to crane 8 (Figure 8), to dig-up grab 14 (Figure 16) or excavation grab 26 (Figure 19), and to guide device 29 (Figure 21).

With reference to Figure 20, actuating module 27 comprises actuators 55 connectable to dig-up grab 14 and excavation grab 26; and actuators 56 connectable to protection grab 52 of guide device 29.

Actuating module 27 and guide device 29 together define a clump 17 bedding assembly.

With reference to Figure 27, actuating module parking module 28 and guide device parking module 30 have practically the same design, and each comprise a cross frame 57 with four lateral stops 58.

The transplant procedure is shown schematically in Figures 4 to 14, and is performed as follows. As shown in Figure 4, floating unit 5 is stationed on body of water 10 over dig-up site 3 populated with water plants 2; and crane 6, connected to actuating module 15, withdraws an empty dig-up grab 14 from a clump parking module 16 on floating unit 9. As shown in Figure 5, crane 6 lowers actuating module 15 together with dig-up grab 14 into body of water 10, so that actuating module 15 rests on bed 11 of body of water 10. Dig-up grab 14 is lowered into the water with scoops 39 open, so they dig into bed 11 of body of water 10; and scoops 39 are then closed to separate a clump 17 of water plants 2 (Figure 15) from the rest of bed 11.

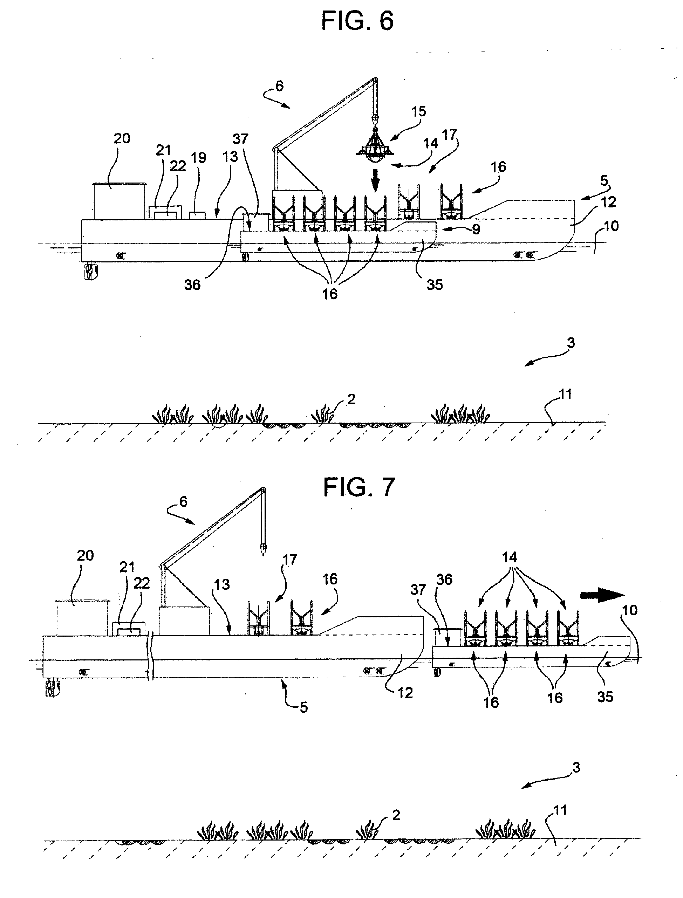

As shown in Figure 6, actuating module 15 and dig-up grab 14 are raised to load dig-up grab 14, together with the respective clump of water plants (not shown in Figure 6) into a clump parking module 16 on floating unit 9. When all the clump parking modules 16 on floating unit 9 are fully loaded, floating unit 9 moves off as shown in Figure 7.

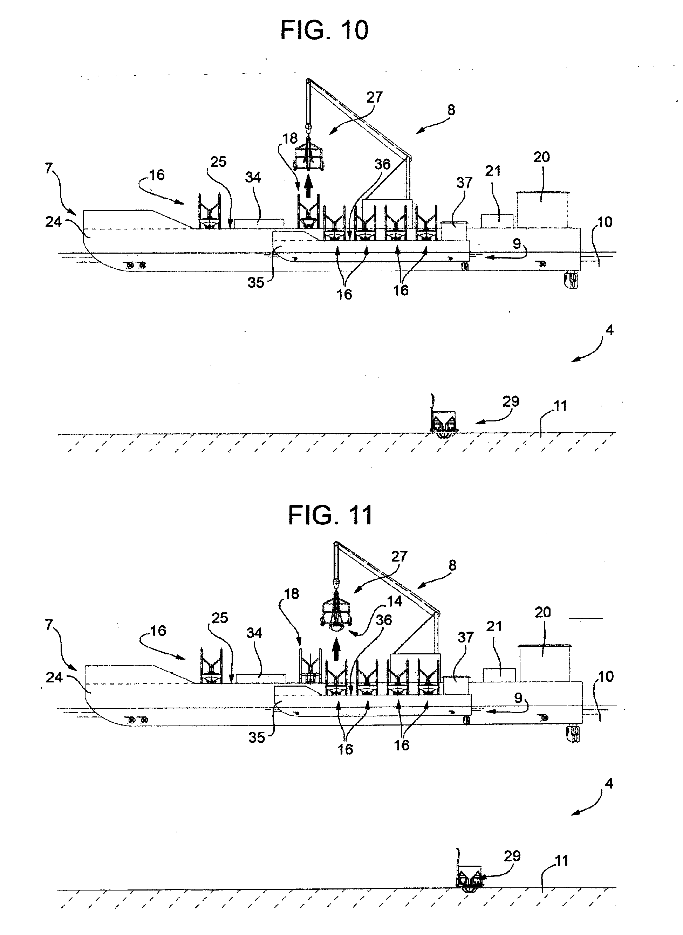

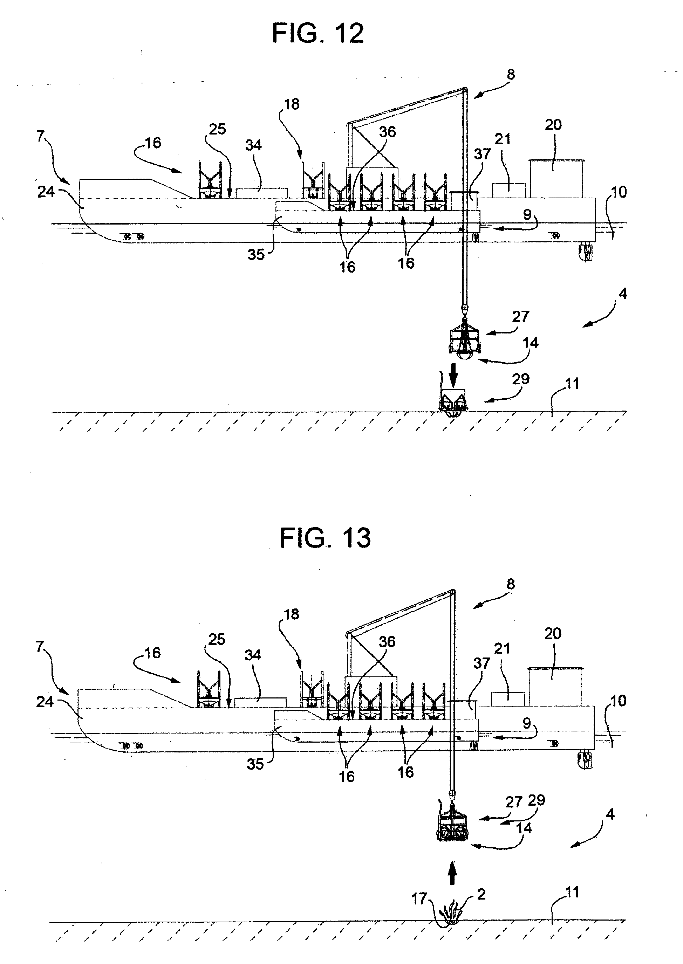

As shown in Figure 8, floating unit 9 has drawn up alongside floating unit 7, which, by means of crane 8, has lowered guide device 29 into planting site 4. Guide device 29 is positioned resting on bed 11 of body of water 10, with scoops 53 of protection grab 52 open so they dig into bed 11. Guide device 29 is lowered onto the bed together with actuating module 27 and excavation grab 26, so actuating module 27 controls both closure of protection grab 52 to detach a portion of bed 11, and closure of excavation grab 26 to scoop up the detached portion of the bed. Protection grab 52 and excavation grab 26 are preferably closed in rapid succession. As shown in Figure 9, actuating module 27 and excavation grab 26 are separated from guide device 29 and hoisted out of body of water 10 to dump the detached portion of bed 11 into container 34, while guide device 29 is left resting on the bed to protect the cavity formed by removing the portion of bed 11. At this point, excavation grab 26 is parked in grab parking module 18 on floating unit 7, and actuating module 27 is connected to a dig-up grab 14 in clump parking module 16 on floating unit 9, as shown in Figures 10 and 11. Though not shown, dig-up grab 14 contains a clump of water plants. As shown in Figure 12, actuating module 27 and dig-up grab 14 are lowered into body of water 10 to connect actuating module 27 to guide device 29. Once actuating module 27 is connected to guide device 29, protection grab 52 of guide device 29 and dig-up grab 14 are opened in rapid succession to bed clump 17 inside the seat, as shown in Figure 15. At this point, as shown in Figures 13 and 14, actuating module 27, guide device 29 and dig-up grab 14 are raised off bed 11 to park dig-up grab 14 in a clump parking module 16 on floating unit 9.

The operations in Figures 4 to 15 are repeated until floating unit 9 is empty.

Scoops 39 (Figures 16, 19) and scoops 53 (Figure 23) are preferably identical, and each in the form of a spherical surface portion. When open, scoops 39 and 53 (Figures 16, 19, 23) are able to dig into the predominantly sandy bed 11, and, when closed, substantially form a spherical container.

Clearly, changes may be made to the embodiment described of the present invention without, however, departing from the protective scope of the accompanying Claims.

In particular, the method described may be implemented using only one floating unit, but obviously with a lower output than when using three.

## Claims

1. A method of transplanting water plants, the method comprising the steps of removing a clump (17) of water plants (2) from a dig-up site (3) along the bed (11) of a body of water (10); digging a seat for the clump (17) in the bed (11) of the body of water (10) at a planting site (4); transporting the clump (17) of water plants (2) from the dig-up site (3) to the planting site (4); bedding the clump (17) of water plants (2) in the seat, wherein the clump (17) is removed, transported, and bedded in the seat using a dig-up grab (14); positioning the dig-up grab (14) inside a protection grab (52); and sequentially opening the protection grab (52) and dig-up grab (14) to bed the clump (17) in the seat.

2. A method as claimed in Claim 1, wherein the clump (17) and seat are complementary.

3. A method as claimed in Claim 2, wherein the clump (17) and seat are bowl-shaped.

4. A method as claimed in any one of the foregoing Claims, wherein the dig-up grab (14) comprises movable scoops (39); each scoop (39) being in the shape of a spherical-surface portion.

5. A method as claimed in any one of the foregoing Claims, and comprising the step of protecting the seat using a protection grab (52) of substantially the same shape, size and design as the dig-up grab (14).

6. A method as claimed in any one of the foregoing Claims, wherein the step of digging the seat in the bed (11) of the body of water (10) comprises closing the protection grab (52) before the excavation grab (26) on the bed (11) of the body of water (10), so the excavation grab (26) is positioned contacting the protection grab (52) and removes a mass of the bed (11), while the protection grab (52) remains contacting the seat.

7. A method as claimed in any one of the foregoing Claims, and comprising the step of transporting the clump (17) from the dig-up site (3) to the planting site (4), and soaking the clump in a basin (43) of a clump parking module (16) on board a floating unit (9).

8. A method as claimed in any one of the foregoing Claims, and comprising the steps of selectively connecting a dig-up grab (14) to a first actuating module (15) to perform the dig-up process, and to a second actuating module (27) to perform the planting process.

9. A system for transplanting water plants, the system comprising a dig-up grab (14) for removing a clump (17) of water plants (2) from a dig-up site (3) along the bed (11) of a body of water (10); an excavation grab (26) for digging a seat for the clump (17) in the bed (11) of the body of water (10) at a planting site (4) ; and a bedding assembly (27, 29) for guiding the dig-up grab (14) and the clump (17) into the seat, and releasing the clump (17) inside the seat, wherein the bedding assembly comprises a guide device (29), in turn comprising a protection grab (52) for forming and protecting the seat, and a structure (50) for guiding the dig-up grab (14) into the seat.

10. A system as claimed in Claim 9, wherein the dig-up grab (14) comprises movable scoops (39); each scoop (39) being in the form of a spherical-surface portion.

11. A system as claimed in Claim 9 or 10, wherein the excavation grab (26) is designed to excavate and remove a mass of the bed (11) of the body of water (10) inside the protection grab (52).

12. A system as claimed in Claim 11, wherein the excavation grab (26) is identical to the dig-up grab (14).

13. A system as claimed in any one of Claims 9 to 12, and comprising a first actuating module (15) selectively connectable to the dig-up grab (14), and which comprises first actuators (41) for operating the scoops (39) of the dig-up grab (14).

14. A system as claimed in any one of Claims 9 to 13, wherein the bedding assembly comprises a second actuating module (27) selectively connectable to the dig-up grab (14) or an excavation grab (26), and to a guide device (29), and which comprises second actuators (55) for operating the scoops (39) of the dig-up grab (14) or the scoops (39) of the excavation grab (26), and third actuators (56) for operating the scoops (53) of a protection grab (52) associated with the guide device (29).

15. A system as claimed in any one of Claims 9 to 14, and comprising a clump parking module (16), in turn comprising at least one basin (43) for housing a dig-up grab (14) with a relative clump (17) of water plants (2) in such a manner as to keep the clump (17) immersed in water during transfer from the dig-up site (3) to the planting site (4).

## Patentansprüche

1. Verfahren, Wasserpflanzen umzupflanzen, die Schritte umfassend, einen Klumpen (17) der Wasserpflanzen (2) von einer Ausgrabestelle (3) entlang des Betts (2) eines Gewässers (10) zu entfernen; an einer Einpflanzstelle (4) einen Sitz für den Klumpen (17) in das Bett (11) des Gewässers (10) zu graben; den Klumpen (17) der Wasserpflanzen (2) von der Ausgrabestelle (3) zu der Einpflanzstelle (4) zu transportieren; den Klumpen (17) der Wasserpflanzen (2) in den Sitz einzubetten, wobei der Klumpen (17) mittels eines Aufgrabegreifers (14) entfernt, transportiert und in den Sitz eingebettet wird; den Aufgrabegreifer (14) innenliegend eines Schutzgreifers (52) zu positionieren; und den Schutzgreifer (52) und den Aufgrabegreifer (14) sequentiell zu öffnen, um den Klumpen (17) in den Sitz einzubetten.

2. Verfahren nach Anspruch 1, wobei der Klumpen (17) und der Sitz komplementär sind.

3. Verfahren nach Anspruch 2, wobei der Klumpen (17) und der Sitz schalenförmig sind.

4. Verfahren nach einem der vorherigen Ansprüche, wobei der Aufgrabegreifer (14) bewegbare Schaufeln (39) umfasst; jede Schaufel (39) die Form eines Kugeloberflächensegments aufweisend.

5. Verfahren nach einem der vorherigen Ansprüche, und den Schritt umfassend, den Sitz mittels eines Schutzgreifers (52) zu schützen, der im Wesentlichen die gleiche Form, Größe und Ausgestaltung des Aufgrabegreifers (14) aufweist.

6. Verfahren nach einem der vorherigen Ansprüche, wobei der Schritt des Grabens des Sitzes in das Bett (11) des Gewässers (10) das Schließen des Schutzgreifers (52) vor dem Aushöhlungsgeifer (26) auf dem Bett (11) des Gewässers (10) umfasst, so dass der Aushöhlungsgeifer (26) den Schutzgreifer (52) kontaktierend angeordnet ist und eine Menge des Betts (11) entfernt, während der Schutzgreifer (52) in Kontakt mit dem Sitz verbleibt.

7. Verfahren nach einem der vorherigen Ansprüche, und den Schritt umfassend, den Klumpen (17) von der Ausgrabestelle (3) zu der Einpflanzstelle (4) zu transportieren, und den Klumpen (17) in einem Becken (43) eines Klumpenparkmoduls (16) an Bord einer Schwimmeinheit (9) zu tränken.

8. Verfahren nach einem der vorherigen Ansprüche, und die Schritte umfassend, wahlweise einen Aufgrabegreifer (14) an ein erstes Antreibemodul (15) anzuschließen um den Ausgrabeprozess durchzuführen, und an ein zweites Antreibemodul (27) um den Einpflanzprozess durchzuführen.

9. Vorrichtung zum Umpflanzen von Wasserpflanzen, die Vorrichtung einen Aufgrabegreifer (14) zum Entfernen eines Klumpens (17) von Wasserpflanzen (2) von einer Ausgrabestelle (3) entlang des Betts (11) eines Gewässers (10); einen Aushöhlungsgeifer (26) zum Graben eines Sitzes für den Klumpen (17) in dem Bett (11) des Gewässers (10) bei einer Einpflanzstelle (4); und eine Einbettungsanordnung (27, 29) zum Führen des Aufgrabegreifers (14) und des Klumpens (17) in den Sitz hinein und zum Herauslösen des Klumpens (17) innerhalb des Sitzes umfassend, wobei die Einbettungsanordnung eine Führungsvorrichtung (29) umfasst, welche wiederum einen Schutzgreifer (52) zum Formen und Schützen des Sitzes, und eine Struktur (50) zum Führen des Aufgrabegreifers (14) in den Sitz hinein umfasst.

10. Vorrichtung nach Anspruch 9, wobei der Aufgrabegreifer (14) bewegbare Schaufeln (39) umfasst; jede Schaufel (39) die Form eines Kugeloberflächensegments aufweisend.

11. Vorrichtung nach einem der Ansprüche 9 oder 10, wobei der Aushöhlungsgeifer (26) dazu ausgebildet ist, eine Menge des Betts (11) des Gewässers (10) innerhalb des Schutzgreifers (52) auszuheben und zu entfernen.

12. Vorrichtung nach Anspruch 11, wobei der Aushöhlungsgeifer (26) identisch zum Aufgrabegreifer (14) ist.

13. Vorrichtung nach einem der Ansprüche 9 bis 12, und ein wahlweise an den Aufgrabegreifer (14) anschließbares erstes Antreibemodul (15) umfassend, und welches erste Aktuatoren (41) zum Betreiben der Schaufeln (39) des Aufgrabegreifers (14) umfasst.

14. Vorrichtung nach einem der Ansprüche 9 bis 13, wobei die Einbettungsanordnung ein wahlweise an den Aufgrabegreifer (14) oder an den Aushöhlungsgeifer (26), und an eine Führungsvorrichtung (29), anschließbares zweites Antreibemodul (27) umfasst, und dieses zweite Aktuatoren (55) zum Betreiben der Schaufeln (39) des Aufgrabegreifers (14) oder der Schaufeln (39) des Aushöhlungsgeifers (26), und dritte Aktuatoren (56) zum Betreiben der Schaufeln (53) eines der Führungsvorrichtung (29) zugehörigen Schutzgreifers (25) umfassend.

15. Vorrichtung nach einem der Ansprüche 9 bis 14, und ein Klumpenparkmodul (16) umfassend, dieses wiederum mindestens ein Becken (43) zur Aufnahme eines Aufgrabegreifers (14) mit einem jeweiligen Klumpen (17) von Wasserpflanzen (2) aufweisend, in einer solchen Art, um den Klumpen (17) während des Transfers von der Ausgrabestelle (3) zu der Einpflanzstelle (4) in Wasser vertieft zu lassen.

## Revendications

1. Méthode de transplantation de plantes aquatiques, la méthode comprenant les étapes de retrait d'une cépée (17) de plantes aquatiques (2) d'un site de déterrage (3) le long du lit (11) d'une masse d'eau (10) ; de creusement d'une assise pour la cépée (17) dans le lit (11) de la masse d'eau (10) au niveau d'un site de plantage (4) ; de transport de la cépée (17) des plantes aquatiques (2) du site de déterrage (3) vers le site de plantage (4) ; de mise en place de la cépée (17) des plantes aquatiques (2) dans l'assise, dans lequel la cépée (17) est retirée, transportée et mise en place dans l'assise au moyen d'un dispositif de saisie pour déterrage (14) ; de positionnement du dispositif de saisie pour déterrage (14) à l'intérieur d'un dispositif de saisie de protection (52) ; et d'ouverture séquentielle du dispositif de saisie de protection (52) et du dispositif de saisie pour déterrage (14) pour mettre en place la cépée (17) dans l'assise.

2. Méthode selon la revendication 1, dans laquelle la cépée (17) et l'assise sont complémentaires.

3. Méthode selon la revendication 2, dans laquelle la cépée (17) et l'assise ont une forme de bol.

4. Méthode selon l'une quelconque des revendications précédentes, dans laquelle le dispositif de saisie pour déterrage (14) comprend des pelles mobiles (39) ; chaque pelle (39) ayant la forme d'une partie de surface sphérique.

5. Méthode selon l'une quelconque des revendications précédentes, comprenant l'étape de protection de l'assise au moyen d'un dispositif de saisie de protection (52) ayant sensiblement la même forme, la même taille et la même conception que le dispositif de saisie pour déterrage (14).

6. Méthode selon l'une quelconque des revendications précédentes, dans laquelle l'étape de creusement de l'assise dans le lit (11) de la masse d'eau (10) comprend la fermeture du dispositif de saisie de protection (52) avant le dispositif de saisie pour excavation (26) sur le lit (11) de la masse d'eau (10), de façon que le dispositif de saisie pour excavation (26) soit positionné en contact avec le dispositif de saisie de protection (52) et retire une masse du lit (11), tandis que le dispositif de saisie de protection (52) reste en contact avec l'assise.

7. Méthode selon l'une quelconque des revendications précédentes, comprenant l'étape de transport de la cépée (17) à partir du site de déterrage (3) vers le site de plantage (4) et de trempage de la cépée dans un bassin (43) d'un module de stockage de cépée (16) à bord d'une unité flottante (9).

8. Méthode selon l'une quelconque des revendications précédentes, comprenant les étapes de raccordement sélectif d'un dispositif de saisie pour déterrage (14) à un premier module d'actionnement (15) pour mettre en oeuvre le procédé de déterrage et à un second module d'actionnement (27) pour mettre en oeuvre le procédé de plantage.

9. Système de transplantation de plantes aquatiques, le système comprenant un dispositif de saisie pour déterrage (14) servant à retirer une cépée (17) de plantes aquatiques (2) d'un site de déterrage (3) le long du lit (11) d'une masse d'eau (10) ; un dispositif de saisie pour excavation (26) servant à creuser une assise pour la cépée (17) dans le lit (11) de la masse d'eau (10) au niveau d'un site de plantage (4) ; et un ensemble de mise en place (27, 29) servant à guider le dispositif de saisie pour déterrage (14) et la cépée (17) dans l'assise et à libérer la cépée (17) à l'intérieur de l'assise, dans lequel l'ensemble de mise en place comprend un dispositif de guidage (29), comprenant à son tour un dispositif de saisie de protection (52) servant à former et à protéger l'assise, et une structure (50) servant à guider le dispositif de saisie pour déterrage (14) dans l'assise.

10. Système selon la revendication 9, dans lequel le dispositif de saisie pour déterrage (14) comprend des pelles mobiles (39) ; chaque pelle (39) ayant la forme d'une partie de surface sphérique.

11. Système selon la revendication 9 ou 10, dans lequel le dispositif de saisie pour excavation (26) est conçu pour excaver et retirer une masse du lit (11) de la masse d'eau (10) à l'intérieur du dispositif de saisie de protection (52).

12. Système selon la revendication 11, dans lequel le dispositif de saisie pour excavation (26) est identique au dispositif de saisie pour déterrage (14).

13. Système selon l'une quelconque des revendications 9 à 12, comprenant un premier module d'actionnement (15) pouvant être raccordé sélectivement au dispositif de saisie pour déterrage (14), et qui comprend des premiers actionneurs (41) servant à faire fonctionner les pelles (39) du dispositif de saisie pour déterrage (14).

14. Système selon l'une quelconque des revendications 9 à 13, dans lequel l'ensemble de mise en place comprend un second module d'actionnement (27) pouvant être raccordé sélectivement au dispositif de saisie pour déterrage (14) ou à un dispositif de saisie pour excavation (26), et à un dispositif de guidage (29), et qui comprend des deuxièmes actionneurs (55) servant à faire fonctionner les pelles (39) du dispositif de saisie pour déterrage (14) ou les pelles (39) du dispositif de saisie pour excavation (26), et des troisièmes actionneurs (56) servant à faire fonctionner les pelles (53) d'un dispositif de saisie de protection (52) associé au dispositif de guidage (29).

15. Système selon l'une quelconque des revendications 9 à 14, comprenant un module de stockage de cépée (16), comprenant à son tour au moins un bassin (43) servant à loger un dispositif de saisie pour déterrage (14) avec une cépée relative (17) de plantes aquatiques (2) de manière à maintenir la cépée (17) immergée dans de l'eau pendant le transfert du site de déterrage (3) vers le site de plantage (4).
